**Europäisches Patentamt**

**European Patent Office**

**Office européen des brevets**

(19)

(11) Numéro de publication: **0 120 275**
**B1**

(12) **FASCICULE DE BREVET EUROPEEN**

(45) Date de publication du fascicule du brevet:
22.04.87

(51) Int. Cl.⁴: **B 25 J 15/04**

(21) Numéro de dépôt: **84101704.9**

(22) Date de dépôt: **18.02.84**

(54) **Porte-outil pour robot industriel.**

(30) Priorité: **11.03.83 FR 8304059**

(43) Date de publication de la demande:
**03.10.84 Bulletin 84/40**

(45) Mention de la délivrance du brevet:
**22.04.87 Bulletin 87/17**

(84) Etats contractants désignés:
**CH DE GB IT LI SE**

(56) Documents cités:
**EP - A - 0 092 534**
**DE - A - 3 003 943**
**FR - A - 2 045 598**

**IBM TECHNICAL DISCLOSURE BULLETIN, vol. 24, no. 6,**
**novembre 1981, pages 2745-2746, New York, US M.E.**
**BOTHUN et al.: "Tool changer for robotic assembly"**

(73) Titulaire: **SYSPRO, 91, avenue de la Libération,**
**F-54000 Nancy (FR)**

(72) Inventeur: **Bancon, Georges Richard, 7 impasse Pasteur**
**Vandoeuvre, F-54500 Nancy (FR)**

(74) Mandataire: **Puit, Thierry et al, c/o Centre de**
**Recherches de Pont-à-Mousson B.P. 28,**
**F-54703 Pont-à-Mousson Cedex (FR)**

ACTORUM AG

## Description

La présente invention est relative à un porte-outil pour robot industriel.

On appelle robot industriel un appareil de manutention ou manipulateur automatique à bras arcticulés effectuant des mouvements dans l'espace, sous l'action d'une centrale hydraulique, et d'une motorisation électrique ou électropneumatique. Un tel robot a des possibilités de force, de précision, de répétition qui sont exploitées au moyen d'un ou de plusieurs outils montés à l'extrémité d'un bras articulé, extrémité parfois appelée poignet.

Plus précisement, l'invention concerne un porte-outil préhenseur d'outil adaptable au poignet d'un robot en vue d'effectuer des manutentions,

– soit dans le cas de petites séries de fabrications différentes qui se succèdent, et sous lesquelles un outil utilisable pour une petite série doit être remplacé par un autre outil pour une nouvelle petite série de fabrication différentes,

– soit dans le cas de séries petites, moyennes ou grandes d'assemblages unitaires, chaque assemblage unitaire nécessitant par exemple successivement: un outil à détecter une présence (palpeur), un outil à saisir (préhenseur: une pince ou une ventouse), un outil à fraiser, un outil à percer, un outil à tarauder, un outil à visser, un outil à souffler pour enlever les copeaux, un outil à souder, un outil à mesurer (une dimension, une intensité de courant), un outil à contrôler, un moteur de broche.

Dans un tel assemblage unitaire d'un produit relativement complexe (par exemple l'assemblage d'un robinet-vanne), il est nécessaire de changer d'outils un certain nombre de fois, et rapidement à chaque fois. Tel est le premier problème posé dans l'utilisation d'un robot industriel.

On connaît des robots dont le poignet est muni d'une bride ou d'un autre moyen de raccordement, sur laquelle on boulonne une bride de fixation correspondante à laquelle est déjà fixé un outil unique. Ce montage convient aux grandes séries de fabrication, par exemple en chaîne, avec le même outil, mais ne convient pas à une série d'assemblages unitaires car le changement d'outil par déboulonnage et reboulonnage de la bride de l'outil sur la bride de fixation au poignet du robot serait trop lent.

On connaît également un porte-outils fixé par boulonnage à la bride de poignet d'un robot, et portant une multiplicité d'outils, avec par conséquent possibilité de changer rapidement d'outil. Un porte-outil de ce genre est soit du type à barillet rotatif portant plusieurs outils à la fois autour d'un axe de rotation se confondant avec l'axe de rotation du poignet de robot, soit du type portant plusieurs outils placés également hors de l'axe de rotation du poignet du robot, mais sans possibilité de rotation autour dudit axe, par exemple sous forme alignée.

Dans le cas du robot, un porte-outils portant plusieurs outils à la fois présente l'inconvénient de faire porter au robot un poids important d'outillage.

Il présente également l'inconvénient géométrique de ne pas pouvoir utiliser l'axe de rotation du poignet du robot comme axe de rotation de l'outil, ce qui complique et alourdit le montage permettant la rotation de chacun des outils du porte-outils. C'est ainsi qu'au moins un moteur supplémentaire indépendant peut s'avérer nécessaire pour entraîner en rotation les outils. C'est ainsi également que, dans le cas de plusieurs outils montés en parallèle et en alignement hors de l'axe de rotation du poignet, des moyens compliqués d'entraînement en rotation de chaque outil, utilisant un ligiciel, sont nécessaire.

A l'inconvénient du poids s'ajoute l'inconvénient de l'encombrement du porte-outils qui peut gêner, sinon interdire certaines opérations du robot.

Par ailleurs, un porte-outils portant plusieurs outils à la fois est souvent étudié pour s'adapter au plus grand nombre possible de cas, de sorte qu'un ou plusieurs outils peuvent éventuellement ne pas être conçus comme des outils spécifiques d'une fonction précise, mais conçus de manière universelle, utilisable et adaptable à des fonctions analogues mais non identiques. Or, on sait que les outils universels ont une efficacité moindre (pour la précision, la fiabilité, la rapidité, la force) que les outils vraiment spécifiques de fonctions déterminées.

Le brevet allemand DE-AI-3 003 943, qui comporte les caractéristiques décrit un porte-outil adapté pour être fixé à un poignet rotatif d'un bras manipulateur comportant des moyens de support d'un seul outil et un piston de commande de l'outil logé dans un alésage cylindrique du porte-outil. Ce porte-outil est doté d'un mécanisme de verrouillage à billes permettant la fixation l'outil dans le porte-outil et sa libération. Un second mécanisme de verrouillage à billes permet la liaison et la libération du piston de commande et de l'outil. Les deux mécanismes de verrouillage sont actionnés par un fluide sous pression.

Enfin, le brevet français n° 2 076 132 décrit un dispositif de blocage d'un outil unique sur la broche d'une machine-outil, permettant un changement automatique et rapide de l'outil.

La broche et l'outil sont munis de cônes d'emmanchement complémentaires, une tige d'entraînement coaxiale pouvant coulisser par rapport à l'outil et à la broche. La tige d'entraînement de l'outil est munie de deux gorges annulaires de logement de deux couronnes de billes en position effacée, et d'un cône d'entraînement coopérant avec l'une des couronnes de billes. Un manchon coaxial coulissant, logeant les deux couronnes de billes, est interposé entre la tige d'entraînement et la broche.

Ce dispositif a pour but d'éviter une traction brutale de l'outil vers la broche (du cône d'emmanchement de l'outil vers celui de la broche) et, corrélativement, des risques de chocs pouvant causer de graves dommages. Les billes sont mobiles axialement et radialement par rapport à l'axe de la broche sous l'action des gorges profilées de la tige d'entraînement. L'une des couronnes réduit la vitesse de translation du manchon par rapport à celle de la tige d'entraînement en vue d'éviter une traction brutale. L'autre couronne solidarise en translation le manchon et le cône de l'outil. Aucune de ces couronnes de billes n'a un rôle de verrouillage.

L'invention a donc pour but de réaliser un porte-outil portant un seul outil spécifique de chaque fonction envisagée, c'est-à-dire parfaitement conçu pour cette fonction, avec la possibilité de tenir fermement cet outil avec verrouillage, et de pouvoir en changer rapidement.

Le porte-outil préhenseur et changeur d'outils pour robot industriel visé par l'invention, est adapté pour être fixé à un poignet rotatif d'un bras du robot et comporte des moyens de support d'un seul outil à cône d'emmanchement coopérant avec ces moyens.

Conformément à l'invention, le porte-outil comprend deux parties susceptibles d'être successivement assemblées et verrouillées ensemble, puis séparées, à savoir:

– une partie amont pouvant être fixée au poignet du robot,

– une partie aval pouvant être fixée à un outil et demeurant solidaire de celui-ci à chaque changement d'outil de façon à lui servir de support,

– ces deux parties amont et aval étant équipées de moyens complémentaires d'assemblage et de verrouillage ainsi que de déverrouillage rapides, et de moyens conjugués de connexion séparables pour assurer l'alimentation de l'outil en énergie, la partie amont contenant un organe moteur pour déplacer les organes de verrouillage et de déverrouillage,

– et la partie aval est adapté pour pouvoir être disposée dans un magasin à outils avec l'outil associé, de manière amovible et accessible à la partie amont portée par le bras du robot.

Ainsi, à chaque outil disposé dans le magasin, est fixée une partie aval qui peut être verrouillée à la partie amont portée par le bras du robot, puis déverrouillée rapidement à l'aide de l'organe moteur de la partie amont, lorsqu'un changement d'outil est nécessaire.

Suivant un mode de réalisation de l'invention, la partie amont comprend comme organe moteur des moyens de verrouillage et de déverrouillage, un vérin à double effet comportant un cylindre ouvert vers le bas et pourvu d'un fond par lequel il est fixé au poignet, une jupe coulissant comme piston dans le cylindre et solidaire d'un manchon disposé coaxialement dans le cylindre, et susceptible de coulisser sur une chemise de retenue, solidaire de la base du cylindre, sous l'action dudit vérin, cependant qu'un cône femelle central est formé dans la partie inférieure de la chemise ouverte vers le bas.

Selon l'autre particularités de l'invention, les moyens de verrouillage des parties amont et aval comprennent:

– dans la partie amont: des moyens de verrouillage menants, solidaires en translation du manchon et comprenant une couronne de billes logée dans une série d'orifices ménagés dans la paroi tubulaire du manchon mobile, intérieure à la chemise fixe laquelle est entourée par la jupe coaxiale du manchon,

– dans la partie aval: des moyens de verrouillage menés comprenant: une tige coaxiale au cône mâle et terminée par une tête susceptible de coulisser à l'intérieur de l'alésage central du manchon et de coopérer avec les billes en vue du verrouillage en translation axiale des parties amont et aval,

– et, entre les moyens de verrouillage menants et menés, des surfaces de roulement et d'appui pour les billes comprenant, dans la partie amont, successivement de haut en bas: un alésage dans la chemise pour le verrouillage axial des parties amont et aval, une rampe tronconique d'évasement ainsi qu'un alésage de dégagement de plus grand diamètre que l'alésage de la chemise, dans lequel coulisse le manchon, cette rampe et ce dégagement autorisant un effacement radial des billes vers l'extérieur du manchon pour le déverrouillage axial des parties amont et aval.

Grâce à cet agencement, le porte-outil selon l'invention présente les avantages de la légèreté au poignet du robot puisqu'il n'y a qu'un seul outil à la fois, une fiabilité maximale notamment en raison de la parfaite spécificité de chaque outil conçu pour une fonction bien déterminée, et de la sécurité de fixation.

D'autres particularités et avantages de l'invention apparaîtront au cours de la description qui va suivre, faite en référence au dessin annexé qui en représente à titre d'exemple non limitatif deux modes de réalisation.

– la Figure 1 est une vue schématique en élévation de l'ensemble d'une installation comprenant un robot industriel, la partie amont du porte-outil fixée au poignet du robot, la partie aval du porte-outil solidaire d'un outil et un magasin ou ratelier portant divers outils;

– la Figure 2 est une vue en coupe axiale à échelle agrandie par rapport à la Figure 1 de la partie amont du porte-outil;

– la Figure 3 est une vue en coupe axiale dans le même plan que la figure 2 de la partie amont et de la partie aval du porte-outil au début d'une opération de saisie d'un outil, partiellement représentée avant l'assemblage et le verrouillage de la partie amont et de la partie aval;

– la Figure 4 est une vue analogue à la Figure 3 montrant l'outil et la partie aval verrouillés dans la partie amont du porte-outil;

– la Figure 5 est une vue analogue à la Figure 4 montrant la partie aval déverrouillée après décollage des cônes d'emmanchement;

– la Figure 6 est une vue en plan suivant 6–6 de la Figure 4 d'une bride à raccords de la partie aval du porte-outil, à échelle agrandie par rapport à la Figure 4;

– la Figure 7 est une vue en coupe axiale verticale d'une variante de réalisation du porte-outil en position verrouillée;

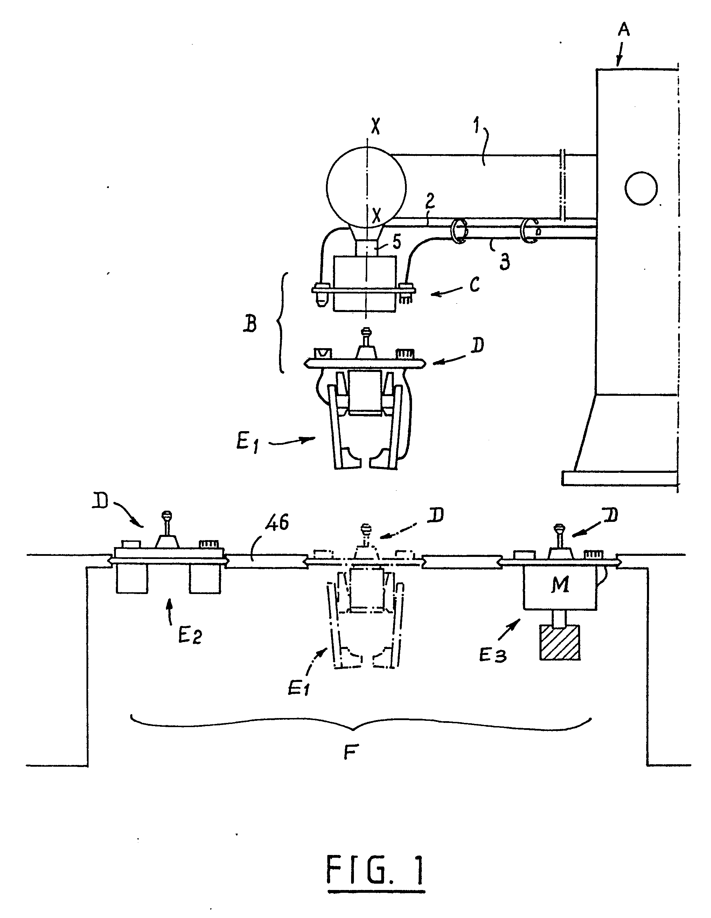

L'installation représentée schématiquement à la Fig. 1 comprend un robot industriel A pourvu d'un bras 1 et d'un poignet 5 relié au bras 1 par une articulation 4, un porte-outil désigné par la référence générale B préhenseur et changeur d'outils pour le robot A, adapté pour être fixé au poignet 5 rotativement autour d'un axe vertical X–X, un outil E1 fixé au porte-outil B, et un ratelier ou magasin F porte-outils.

Le bras 1 porte des connexions 2 et 3, de manière connue en soi, destinées respectivement à alimenter le porte-outil B et l'outil E1 (ou l'un des autres outils du magasin F) en fluide sous pression et en énergie électrique.

Le porte-outil B est destiné à supporter l'un quelconque des outils E1, E2, E3; . . . du magasin F, à raison d'un seul à la fois. Dans cet exemple, le magasin est pourvu de trois outils à savoir une pince de préhension E1, une ventouse de préhension E2, et une fraise électrique d'usinage E3, comportant un moteur M.

Le port-outil B comprend deux parties susceptibles d'être successivement assemblées et verrouillées ensemble, puis séparées à savoir:

– une partie amont C pouvant être fixée au poignet 5 du robot A,

– une partie aval D pouvant être fixée à un outil tel que E1, et demeurant solidaire de celui-ci à chaque changement d'outil de façon à lui servir de support.

Les deux parties amont C et aval D sont équipées de moyens complémentaires d'assemblage et de verrouillage ainsi que de déverrouillage rapides, et de moyens conjugués de connexion séparables, pour assurer l'alimentation de l'outil E1, E2; . . . en énergie par les canalisations 2, 3, la partie amont C contenant un organe moteur pour déplacer les organes de verrouillage et de déverrouillage,

– la partie aval D étant adaptée pour pouvoir être disposée dans le magasin F avec l'outil associé E1, E2; . . . de manière amovible et accessible à la partie amont C.

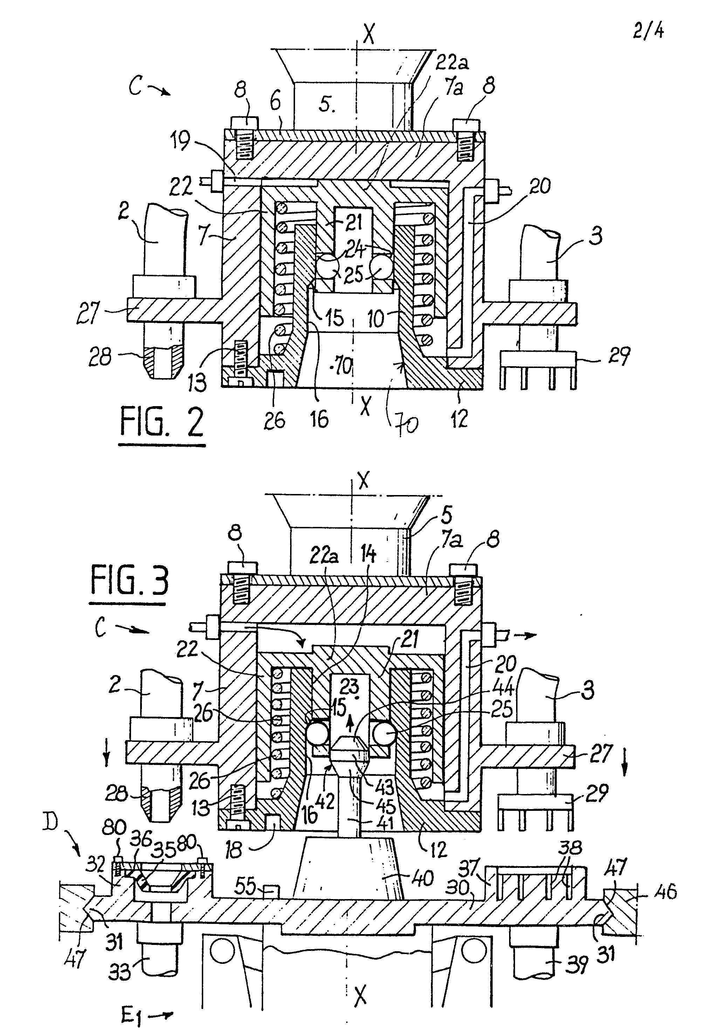

On décrira tout d'abord la partie amont C en se référant plus particulièrement aux Figures 2 à 6.

L'organe moteur précité des moyens de verrouillage et de déverrouillage est constitué d'un vérin à double effet comportant un cylindre 7 d'axe X–X, ouvert vers le bas et pourvu d'un fond 7a par lequel il est fixé au poignet 5 avec interposition d'une bride 6 rendue solidaire du fond 7a par des vis 8. A l'intérieur du cylindre 7, est montée coulissante une jupe cylindrique 22 pourvue d'un fond 22a réalisé d'une seule pièce avec la jupe 22 et avec un manchon cylindrique 21 coaxial au cylindre 7 et à la jupe 22. La pièce 22, 22a, 21 peut donc coulisser à l'intérieur du cylindre comme un piston, suivant l'axe X–X.

Le manchon 21 peut de son côté coulisser dans une chemise 10 de retenue, d'axe X–X, solidaire de la base du cylindre 7 à l'opposé du fond 7a, sous l'action du vérin 7, 22, et un cône femelle 70 central, d'axe X–X, est formé dans la partie inférieure de la chemise 10 ouverte vers le bas. A sa base, la chemise 10 présente une bride 12 fixée au cylindre 7 par des vis 13. Un conduit 19 ménagé dans le cylindre 7 débouche entre les fonds 7a et 22a, donc à l'extrémité supérieure du cylindre 7, tandis qu'un second conduit 20 également ménagé dans le cylindre 7, débouche d'une part à la base de celui-ci, et d'autre part à son extrémité supérieure vers l'extérieur. Les conduits 19 et 20 peuvent alimenter le vérin, 7, 22 en fluide sous pression, tel que de l'air comprimé, l'un de ces deux conduits recevant l'air comprimé tandis que l'autre est relié à la décharge, afin de faire coulisser la jupe-piston 22 dans un sens ou dans l'autre à l'intérieur du cylindre 7. Ainsi, si du fluide comprimé est admis par le conduit supérieur 22, le conduit 20 est relié à la décharge, ce qui permet à la jupe 22 et auch manchon 21 de coulisser vers le bas. Les conduits 19, 20 sont reliés à un dispositif d'alimentation en fluide comprimé non représenté.

Entre la chemise 10 et la jupe 22, dans le volume annulaire réservé entre ces deux pièces, est disposé un ressort hélicoïdal 26 d'axe X–X, prenant appui à son extrémité inférieure sur la bride 12, et sollicitant vers le haut le piston constitué par la jupe 22, son fond 22a et le manchon 21 afin de rappeler constamment ce piston en position haute.

Le cylindre 7 constitue avec la jupe 22 et le fond 22a un vérin à double effet à piston 22, 22a, rappelé automatiquement par le ressort 26 en position haute avec le fond 22a en appui contre le fond 7a lorsqu'aucun fluide sous pression n'arrive par le conduit 19.

La partie amont C comporte également des moyens de verrouillage et de déverrouillage de la partie aval D, qui seront décrits plus loin en même temps que les moyens complémentaires associés de la partie aval D, de même que pour les moyens de raccordement de ces deux parties C, D en fluide comprimé et en énergie électrique.

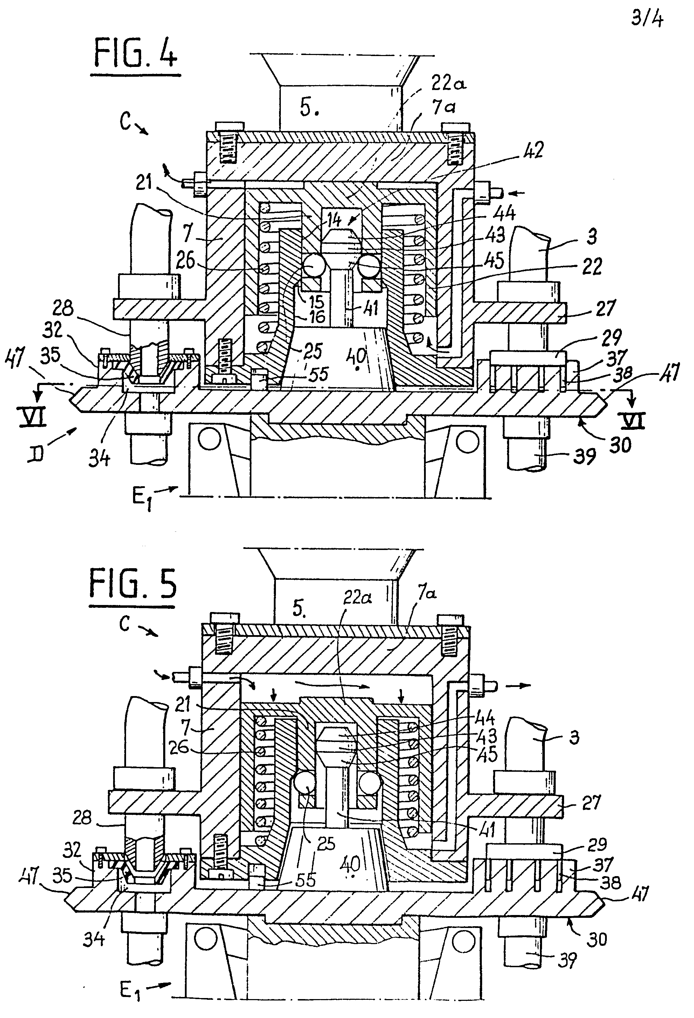

La partie aval D sera maintenant décrite en se référant plus particulièrement à la Figure 3.

Cette partie D présente un cône mâle central 40 conjugué avec le cône femelle 70 afin de pouvoir s'emmancher dans celui-ci avec lequel il est coaxial. Le cône 40 est fixé à une bride 30 de support de l'outil associé à la partie aval D, c'est-à-dire dans l'exemple illustré aux Figures 3 à 5 et 7, la pince de préhension E1. Comme on le voit à la Fig. 1, chaque outil E1, E2, E3; . . . est fixé sous la bride 30 de la partie aval D correspondante, susceptible de coopérer avec l'unique partie amont C fixée au poignet 5 du robot A.

Les moyens de verrouillage des parties amont C et aval D comprennent:

– dans la partie amont C: des moyens de verrouillage menants, solidaires en translation du manchon 21 et qui comprennent une couronne de billes 25 logée dans un série d'orifices 24 ménagés dans la paroi tubulaire du manchon mobile 21 intérieur à la chemise fixe 10;

– dans la partie aval D: des moyens de verrouillage menés comprenant une tige 41 (Figures 3 à 5) coaxiale au cône mâle 40 et terminée par une tête 42 susceptible de coulisser à l'intérieur de l'alésage central 23 du manchon 21, et de coopérer avec les billes 25 en vue du verrouillage en translation axiale des parties amont C et aval D;

– et, entre les moyens de verrouillage menants et menés, des surfaces de roulement et d'appui pour les billes 25. Ces surfaces comprennent dans la partie amont C, successivement de haut en bas: un alésage 14 dans la chemise 10 pour le verrouillage axial des parties C, D, une rampe tronconique d'évasement 15, et un alésage de dégagement 16 de plus grand diamètre que l'alésage 14 dans lequel coulisse le manchon 21. La rampe 15 et le dégagement 16 autorisent un effacement radial des billes 25 vers l'extérieur du manchon 21 pour le déverrouillage axial des parties amont C et aval D.

La tête de verrouillage 42 est constituée d'un bulbe biconique coaxial au manchon 21, composé de deux troncs de cône 44, 45 agencés de part et d'autre d'une bande cylindrique centrale 43 dont le diamètre est égal à celui de l'alésage central 23, afin de pouvoir coulisser dans le manchon 21. Le tronc de cône inférieur 45 est susceptible de prendre appui sur la couronne de billes 25 en position de verrouillage des parties amont C et aval D.

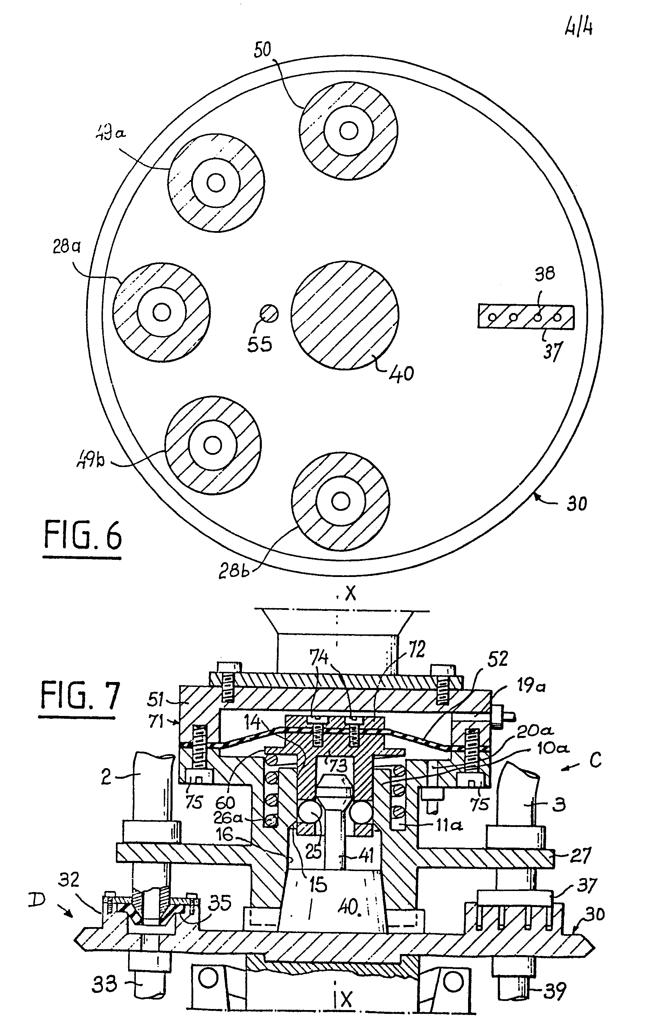

Les parties amont C et aval D sont munies de raccords complémentaires 28, 32–29, 37 reliés à des conduits correspondants 2, 33–3, 39. Ces raccords et conduits permettent d'assurer l'alimentation de l'outil E1 (ou E2, E3, . . .), d'une part en fluide comprimé par les conduits 2, 33 et les raccords correspondants complémentaires 28, 32, et d'autre part en électricité par les conduits 3, 39 et les raccords complémentaires correspondants 29, 37. Les raccords 28 et 29 reliés respectivement aux conduits 2 et 3, sont fixés de même que ces derniers, à une bride 27 faisant saillie autour du cylindre 7 dont elle est solidaire. D'autres raccordements sont prévus sur les brides 27 et 30, et sont illustrés à la Figure 6 en ce qui concerne la bride 30. Cette dernière comporte ainsi des raccordements d'entrée 49a et de sortie 49b d'eau de refroidissement, ainsi qu'une ouverture d'aspiration 50 reliée à une pompe à vide non représentée. On voit également sur la Figure 6 deux ouvertures 28a, 28b de réception d'embouts d'alimentation en fluide comprimé.

Chacun des raccordements précités, assurant une alimentation en fluide liquide ou gazeux, sous pression ou en dépression, ou en fluide de refroidissement (eau), est réalisé de manière étanche de la manière suivante: l'embout saillant 28 correspondant, fixé à la bride 27 peut s'emboîter en contact étanche dans une rondelle d'étanchéité 35 prévue dans une chambre 34 du bossage de connexion 32 de la bride 30, cette rondelle 35 étant fixée au bossage 32 par encastrement de sa périphérie entre le bossage et un couvercle 36 fixé à ce dernier par des vis 80. La rondelle 35a une lèvre tronconique conjuguée de l'extrémité tronconique de l'embout 28, ce qui permet de réaliser un raccordement étanche par emboîtement de l'embout 28 dans la lèvre 35 (Figure 4).

La fiche 29 de raccordement en énergie électrique de l'outil au robot A est réalisée de manière classique à broche. La fiche mâle 29 vient s'emboîter dans les trous 28 complémentaires du raccord femelle 37 fixé à la bride 30 de la partie aval D, lorsque cette dernière est verrouillée à la partie amont C (Figure 4), assurant ainsi l'alimentation de l'outil en énergie électrique à partir du robot A.

Le porte-outil B est équipé de moyens de solidarisation en rotation de la partie aval D avec la partie amont C. Ces moyens consistent dans l'exemple représenté, en un ergot 55 faisant saillie sur la bride 30, et un trou borgne 18 correspondant, ménagé dans la bride 12 de la chemise 10.

La bride 30 est adaptée pour venir coulisser dans un plateau 46 de support, faisant partie du magasin à outils F, et ce, au moyen de bords doublement biseautés en V 31 susceptibles de coulisser dans des rainures 47 de guidage correspondantes du plateau 46 (Figure 3).

En variante, la bride 30 peut former avec une portée conjuguée sur le plateau 46, un assemblage verrouillé rotatif de typ baïonnette.

Fonctionnement du porte-outil B

Soit à saisir un outil E1 sur le magasin ou râtelier F en vue de le monter sur le porte-outil B fixé par le cylindre 7 et les vis 8 sur la bride 6 du poignet 5 du bras 1 du robot A.

1/ Emmanchement de la partie aval D à outil sur la partie amont C changeur d'outil (Fig. 3):

Le robot A amène la partie amont C ou changeur d'outil dans le prolongement axial d'axe X–X de la partie aval D correspondant à l'outil choisi, par exemple une pince E1 en prise par sa plaque-support ou bride 30 sur la plaque-support 46 du magasin F.

Sous l'action du bras 1 du robot A, le cylindre 7 (partie amont C) descend et se rapproche de la partie aval D.

Pendant cette descente, le conduit supérieur 19 est relié à une source d'air comprimé et le conduit inférieur 20 à une décharge (flèches sur la Figure 3). Il en résulte que le piston 22, 22a et le manchon mobile 21 sont poussés vers le bas, comprimant le ressort 26. Les billes 25 sont escamotées en deçà de la paroi de l'alésage 23 du fait qu'elles se trouvent d'abord au droit de la rampe d'évasement 15, puis au droit de l'alésage de dégagement 16.

Pendant cette descente, la tête à bulbe biconique 42 pénètre dans l'alésage 23 du manchon mobile 21 et franchit la couronne d'orifices 24 dont les billes 25 sont en retrait par rapport à l'alésage 23. La descente du cylindre 7 de la partie C continuant, le cône supérieur 44 passe au-dessus des orifices 24, ainsi que la bande cylindrique 43 et le cône inférieur 45 du bulbe 42.

Le cône mâle 40 de la partie aval D s'emmanche dans le cône femelle 70 de la partie C, et l'ergot 55 de la partie D pénètre dans le trou 18 de positionnement et de solidarisation en rotation des parties C et D. Le bulbe 42 est alors proche du fond de l'alésage 23 du manchon 21.

En fin d'emmanchement, la descente de la partie C s'arrête et le verrouillage s'effectue.

2/ Verrouillage des parties C et D (Figure 4):

L'alimentation en air comprimé est inversée.

Elle arrive au conduit inférieur 20 tandis que le conduit supérieur 19 est relié à la décharge (flèches sur la Fig. 4). Le piston 22 du manchon 21 monte à la fois sous l'action de l'air comprimé et sous celle du ressort 26 qui se détend. Au cours de cette montée, la couronne de billes 25 qui était en appui contre l'alésage 16 de dégagement vient en appui d'abord contre la rampe tronconique 15 d'évasement, puis contre la paroi de l'alésage 14 et corrélativement contre le cône inférieur 45 du bulbe 42, comme on le voit clairement sur la Figure 4.

En effet, les parois successives de la rampe 15 et de l'alésage 14 obligent la couronne de billes 25 à se rapprocher de la tige 41 et à s'appliquer autour du cône inférieur 45 du bulbe 42 en entraînant encore légèrement le bulbe 42 vers le haut sous la poussée de la jupe 22. Cela a pour effet d'enfoncer un peu plus le cône mâle 40 dans le cône femelle 70.

De ce fait, au cours de la fin du déplacement de verrouillage, la couronne de billes 25 se trouve emprisonnée dans les orifices radiaux 24 qui sont les surfaces menantes entre la surface d'appui fixe de l'alésage 14 et la surface d'attaque mobile ou surface menée du cône inférieur 45 du bulbe 42. Les billes 25 se trouvent en contact ponctuel avec ces différentes surfaces, en position de coïncement, ce qui correspond à une poussée importante vers le haut et à un très faible déplacement vers le haut du bulbe 42. Il s'agit encore d'un contact de roulement contre la paroi de l'alésage 14, au cours de ce très faible déplacement, et de contact de roulement également dans les orifices 24, mais d'un contact de frottement contre le cône 45. Ceci provoque le verrouillage du bulbe 42, donc de la partie D à outil E1 dans la partie C changeur d'outil.

En position verrouillée, le bulbe 42, et plus précisément son cône supérieur 44, se trouve à une certaine distance du fond de l'alésage 23 du manchon mobile 21 (Figure 4).

Ce verrouillage se maintient même, si, par accident, il y a coupure d'alimentation en air comprimé par le conduit inférieur 20. En effet, même si la seule force du ressort 26 subsiste pour maintenir vers le haut la jupe 22 et le manchon 21, tout effort continu important vers le bas exercé sur la partie inférieure aval D en vue de la séparer de la partie supérieure amont C ne peut qu'accroître le coïncement de la couronne de billes 25 entre les surfaces de contact ponctuelles 14, 45 sous la poussée vers le bas du bulbe 42 et par conséquent un coïncement desdites billes 25 contre la surface d'appui fixe 14, avec contacts de frottements contre cette surface 14 et contre le cône inférieur 45.

3/ Branchement des énergies et fluides au cours de l'emmanchement des parties C et D:

Au cours de l'emmanchement, les axes Y—Y des raccords de connexion respectifs des parties C et D se trouvent en coïncidence et les raccords en mouvement de rapprochement relatif.

a) L'embout 28 du conduit 2 d'air comprimé pénètre dans le bossage 32 jusqu'en position de contact avec la rondelle d'étanchéité élastique 35.

A l'état libre (Figure 3), la conicité de cette rondelle 35 est légèrement supérieure à celle de l'embout 28 (l'angle au centre du cône de la rondelle 35 est légèrement supérieur à celui de l'embout 28). Il en résulte que l'introduction de l'embout 28 dans la rondelle 35 tend à accroître de force la conicité de celle-ci, de sorte que par réaction la lèvre conique de la rondelle 35 s'applique avec serrage de manière étanche sur l'embout 28.

L'air comprimé peut alors être admis dans les conduites 2 et 33, par exemple pour alimenter un petit vérin non représenté d'ouverture et de fermeture de la pince E1.

b) La fiche 29 de la partie C vient s'adapter par ses broches sur le raccord à bossage 37 et à trous 38 de la partie D. Le courant électrique peut alors être admis sur le câble d'alimentation 3, donc sur le câble 39. Ce courant électrique est utilisable par exemple pour alimenter de petits électro-aimants dont seraient dotées les mâchoires de la pince E1 en vue de faciliter la préhension d'un objet magnétique à saisir.

D'une manière analogue, bien que cela ne soit pas représenté, le raccord 50 (Figure 6) pour une prise de vide ou d'aspiration pourrait être relié à des ventouses si les mâchoires de la pince E1 en étaient dotées. Bien entendu, dans le cas de l'outil E2 qui est une ventouse de préhension, c'est le conduit d'aspiration du raccord de connexion 50 qui est utilisable.

Pour un outil d'usinage, tel que par exemple une fraise (outil E3), on peut utiliser le raccord de connexion 49a à coulée d'eau de refroidissement. On peut également utiliser la broche électrique 29 pour alimenter le moteur M d'entraînement en rotation de la fraise (outil E3).

Dans le cas, non illustré, où l'outil E de la partie D nécessiterait un refroidissement continu par circulation d'eau, il serait relié grâce aux raccords de connexion de la bride 27 de la bride 30 à l'entrée d'eau de refroidissement 49a et à la sortie d'eau de refroidissement 49b. Un tel outil pourrait être par exemple une pince à souder par points avec transformateur refroidi par eau ou électrodes refroidies par eau, ou encore par un simple jet d'eau ou d'huile.

Après raccordement des connexions sur la bride 27 et la bride de support 30, il est possible que certains fluides et énergies ne soient pas utilisés par l'outil qui vient d'être raccordé et verrouillé. Dans ce cas, il suffit de ne pas admettre ces fluides et énergies sur les conduits concernés. On peut également placer un bouchon au fond de la chambre 34 ou encore remplacer la rondelle annulaire 35 par une rondelle pleine ou membrane circulaire.

4/ Enlèvement de l'outil E1 hors du magasin F et travail:

L'outil E1 (une pince par exemple) étant ainsi saisi et verrouillé par accouplement des parties C et D, le robot A le fait glisser par sa bride de support 30 le long des rainures 47 du magasin F jusqu'à ce que la bride 30 sorte des rainures et que la partie D soit ainsi libérée du magasin F. Dans le cas où la plaque support 30 et la rainure 47 seraient circulaires avec système de verrouillage baïonnette, d'oreilles complémentaires, il y aurait d'abord une rotation de déverrouillage, puis un mouvement vers le haut de la bride-support 30.

Pour le travail de la pince E1 consistant par exemple à saisir et à manipuler une pièce à usiner, non représentée, on admet l'air comprimé dans le conduit 2 et le conduit 33 pour ouvrir et fermer la pince E1. On admet en outre, éventuellement, le courant électrique dans le câble 3 et le câble 39 en vue d'alimenter d'éventuels électro-aimants dont serait dotée la pince E1 sur ses mâchoires. Enfin, le poignet rotatif 5 du robot A fait tourner l'outil E1 autour de l'axe X–X du porte-outil B grâce à la coaxialité des parties C et D, et grâce à la solidarisation en rotation des parties C et D par le trou 18 et l'ergot 55.

5/ Retour de l'outil E1 au magasin F et déverrouillage puis séparation des parties C et D (Figure 5):

L'outil E1 est d'abord ramené au magasin F: Une manœuvre d'engagement de la bride-support 30 dans les rainures 47 (avec manœuvre de rotation s'il s'agit d'un verrouillage à baïonnette) est effectuée. Puis l'on procède aux manœuvres de déverrouillage et de séparation des parties C et D.

En vue du déverrouillage, on admet soudainement l'air comprimé par le conduit supérieur 19 du cylindre 7 tout en mettant le conduit inférieur 20 à la décharge. Cette admission soudaine de fluide sous pression projette la jupe-piston 22 vers le bas à l'encontre du ressort 26 qui se trouve comprimé. Il en résulte que le fond de l'alésage 23 du manchon 21 assène un véritable coup de marteau sur le cône supérieur 44 du bulbe biconique 42. Ce coup de marteau décolle le cône mâle 40 du cône femelle 70 de la partie C, tout en faisant coulisser le manchon 21 dans l'alésage 14 de la chemise 10. Le déplacement vers le bas du manchon 21 par rapport à la chemise 10 libère les billes 25 de leur position coïncée, les fait rouler d'abord contre la paroi de l'alésage 14 puis sur la rampe tronconique 15 d'évasement, ce qui permet leur futur espacement radial hors de l'alésage 23 du manchon 21 sous l'action du cône inférieur 45.

La course vers le bas du manchon 21 est parachevée, par alimentation convenable en air comprimé par le conduit 19.

Le robot A, manœuvrant le poignet 5, fit alors remonter le cylindre 7 dans le mouvement inverse de celui de la Fig. 3, de sorte que le bulbe 42 coulisse vers le bas dans l'alésage 23, pousse les billes 25 contre l'alésage de dégagement 16 par son cône 45, franchit le seuil de la couronne de billes 25 et sort de l'alésage 23.

Les cônes d'emmanchement 70 et 40 se séparent. Le robot A emmène la partie C et laisse la partie D au magasin F.

Simultanément, les raccords de connexion de fluides et d'énergie électrique se séparent après que l'on ait interrompu les alimentations en fluides et énergie, afin d'éviter des fuites (eau, air comprimé) ou des étincelles de rupture provoquant des détériorations des contacts électriques.

Dès que la partie supérieure C a été complètement détachée de la partie inférieure D (Figure 2), l'alimentation en air comprimé est ramenée sur le conduit inférieur 20 alors que le conduit supérieur 19 est relié à la décharge, ce qui fait remonter la jupe 22 du manchon 21 vers la haut sous l'action de l'air comprimé et du ressort 26.

Avantages du porte-outil B selon l'invention:

Grâce à l'unicité de l'outil E1 (ou E2 ou E3), pris par le porte-outil B et grâce au faible poids du porte-outil B et de l'outil supporté par l'extrémité du bras 1 du robot A, on assure au bras 1 aisance et rapidité de ses mouvements dans l'espace.

L'unicité de l'outil E1 (ou E2 ou E3) porté par le porte-outil B de l'invention permet de bénéficier de la spécifité de l'outil à la tâche qu'il doit effectuer. Cette spécifité parfaite de l'outil, c'est-à-dire l'adaptation parfaite de l'outil à sa tâche, assure la fiabilité maximale du fonctionnement du système robot A porte-outil B.

La séparation du porte-outil B en deux parties C et D susceptibles d'être accouplées et désaccouplées et susceptibles d'être verrouillées, de manière rapide, par simple mouvement relatif de coulissement ou de translation, assure un changement rapide et qui peut être automatisé.

Grâce encore à l'unicité de l'outil E1 (ou E2 ou E3) sur le porte-outil B, l'ensemble du porte-outil B et de l'outil E1 (ou E2 ou E3) bénéficie de l'encombrement minimal, ce qui peut faciliter l'accessibilité de l'outil transporté par le robot A dans certains espaces restreints.

La coaxialité des parties C et D du porte-outil B suivant l'axe X–X, et leur solidarisation en rotation permet au poignet 5 du robot A d'assurer une rotation complète de l'outil E1, E2, E3, ... autour de l'axe X–X, si le robot A est actionné à cet effet. Il en résulte que l'outil unique transporté peut être utilisé à un vissage ou à un dévissage, ou encore à une orientation angulaire d'une pièce au cours d'un mouvement de rotation autour de l'axe X–X.

La combinaison de la couronne de billes 25 de l'alésage 14, du dégagement 16, de la rampe tronconique 15, du manchon 21 à orifices radiaux 24, à alésage 23, et du bulbe biconique 42 garantit l'obtention d'un verrouillage puissant de la partie D à outil dans la partie C changeur d'outil.

La combinaison du fond de l'alésage 23 du manchon 21, formant marteau, et de la partie supérieure du cône supérieur 44 formant enclume, et la mobilité du manchon 21 à jupe-pisotn 22 à l'intérieur du cylindre 7 formant corps de vérin permettent de réaliser le déverrouillage par un véritable coup de marteau sur le bulbe 42 pour décoller le cône 40 de l'outil du cône 70 du changeur d'outil.

C'est également l'actionnement de ce vérin à cylindre 7 et à jupe-piston 22 qui contribue à l'introduction du bulbe 42 dans l'alésage 23, et à son verrouillage par la couronne de billes 25 forcée de se placer entre l'alésage 14 et le cône inférieur 45 du bulbe 42.

Enfin, grâce aux raccords de connexion tels que l'embout 28 et le bossage 32 à rondelle d'étanchéité 35 pour un fluide, et la broche 29 coopérant avec le bossage 37 pour l'électricité, les fluides et l'énergie électrique peuvent être apportés par le robot A et se brancher et se débrancher automatiquement au cours de l'emmanchement ou au cours de la séparation des parties C et D.

Dans la variante d'exécution illustrée à la Figure 7, l'organe moteur prévu pour déplacer les moyens de verrouillage et de déverrouillage est un vérin pourvu d'une membrane souple 52 fixée par sa périphérie au corps 51 d'un cylindre 71 d'axe X–X. Dans sa zone centrale, la membrane souple 52 traverse le fond 72 d'un manchon 73 coaxial au cylindre 71, la fixation de la membrane 52 au manchon 73 étant assurée par des vis 74. Le manchon 73 peut coulisser à l'intérieur d'une chemise fixe 10a réalisée d'une seule pièce avec le corps 51, le manchon 73 étant pourvu d'une collerette annulaire 60 sollicitée élastiquement par un ressort hélicoïdal de rappel 26a logé dans une gorge 11a coaxiale à la chemise 10a.

La fixation de la membrane 52 par sa périphérie au corps 51 est assurée par un ensemble de vis 75 engagées dans le corps 51.

La membrane 52 a pour fonction de déplacer le manchon 73 sous l'action d'un fluide sous pression amené, soit sur sa face supérieure par un conduit 19a formé dans le corps 51 et débouchant entre le fond de ce dernier et la membrane 52, soit par un conduit 20a débouchant à l'intérieur du corps 51 sur la face opposée de la membrane 52.

Le fonctionnement de cette variante de réalisation est le même que celui de la réalisation précédente.

## Revendications

1. Porte-outil (B) préhenseur et changeur d'outils pour robot industriel (A), adapté pour être fixé à un poignet (5) rotatif d'axe (X–X) d'un bras (1) du robot (A) et comportant des moyens de support d'un seul outil (E1, E2, . . .) à cône d'emmanchement (40) coopérant avec ces moyens, comprenant deux parties susceptibles d'être successivement assemblées et verrouillées ensemble, puis séparées, à savoir:

— une partie amont (C) pouvant être fixée au poignet (5) du robot (A),

— une partie aval (D) pouvant être fixée à un outil (E1, . . .) et demeurant solidaire de celui-ci à chaque changement d'outil de façon à lui servir de support,

— ces deux parties amont (C) et aval (D) étant équipées de moyens complémentaires d'assemblage et de verrouillage ainsi que de déverrouillage rapides, et de moyens conjugués de connexion séparables pour assurer l'alimentation de l'outil (E1, E2, . . .) en énergie, la partie amont (C) contenant un organe moteur (7–22, 51–52) pour déplacer les organes de verrouillage et de déverrouillage,

— et la partie aval (D) étant adaptée pour pouvoir être disposée dans un magasin (F) à outils avec l'outil associé, de manière amovible et accessible à la partie amont (C) portée par le bras (5) du robot (A), caractérisé en ce que la partie amont (C) comporte un cône femelle (70) central d'axe (X–X) formé dans la partie inférieure d'une chemise (10) de retenue ouverte vers le bas tandis que la partie aval (D) présente un cône mâle central (40) d'axe (X–X), conjugué avec le cône femelle (70) de la partie amont (C) afin de s'emmancher dans celui-ci, prolongé vers la partie amont (C) par une tige (41) coaxiale au cône mâle (40) et terminée par une tête (42) de verrouillage.

2. Porte-outil selon la revendication 1, caractérisé en ce que la partie amont (C) comprend comme organe moteur des moyens de verrouillage et de déverrouillage, un vérin à double effet (7–22) comprenant un cylindre (7) d'axe (X–X) ouvert vers le bas et pourvu d'un plafond par lequel il est fixé au poignet (5), une jupe (22) coulissant comme piston dans le cylindre (7) et solidaire d'un manchon (21) disposé coaxialement dans le cylindre (7), et susceptible de coulisser sur la chemise (10) d'axe X–X, solidaire de la base du cylindre (7), sous l'action dudit vérin (7–22), deux conduits (19) et (20) débouchant aux extrémités supérieure et inférieure du cylindre (7) pour l'admission de fluide sous pression ou la mise à la décharge.

3. Porte-outil selon la revendication 2, caractérisé en ce qu'entre la jupe (22) du manchon (21) et la jupe (10) est ménagé un volume annulaire dans lequel est logé un ressort hélicoïdal (26), d'axe (X–X), de rappel du manchon (21) de la jupe (22) en position haute, en appui sur la chemise fixe (10).

4. Porte-outil selon les revendications 1 et 2, caractérisé en ce que la tête (42) de verrouillage terminant la tige (41) est constituée d'un bulbe biconique coaxial au manchon (21) et au cylindre (7), ce bulbe se composant de deux troncs de cône (44, 45) agencés de part et d'autre d'une bande cylindrique centrale (43) dont le diamètre est égal à celui de l'alésage central (23) du manchon (21) afin de pouvoir y coulisser, le tronc de cône inférieur (45) étant susceptible de prendre appui sur une couronne de billes (25), logée dans une série d'orifices (24) ménagés dans la partie tubulaire du manchon (21), en position de verrouillage des parties amont (C) et aval (D).

5. Porte-outil selon la revendication 1, dans lequel chaque raccordement d'une alimentation en fluide liquide ou gazeux sous pression ou dépression ou en fluide de refroidissement est réalisé d'une manière étanche au moyen d'un embout saillant (28) fixé à une bride (27) de la partie amont (C) et qui peut s'emboîter en contact étanche dans une rondelle d'étanchéité (35) prévue à l'intérieur d'un bossage de connexion (32) formé sur la bride (30) de la partie aval (D), caractérisé en ce que l'embout saillant (28) est tronconique et la rondelle d'étanchéité (35) conjuguée est à lèvre également tronconique et est fixée par sa périphérie entre le bossage (32) et un couvercle (36) fixé sur le bossage (32).

6. Porte-outil selon la revendication 1, caractérisé en ce que la partie amont (C) comprend comme organe moteur pour déplacer les moyens de verrouillage et de déverrouillage un vérin à membrane souple (52), la membrane étant fixée par sa périphérie au corps (51) d'un cylindre (71), et solidaire d'un manchon (73) coaxial, susceptible de coulisser à l'intérieur d'une chemise fixe (10a), laquelle est réalisée d'une seul pièce avec le corps (51) du cylindre (71), ledit manchon (73) étant pourvu d'une collerette annulaire (60) sollicitée élastiquement par un ressort hélicoïdal de rappel (26a) logé dans une gorge (11a) coaxiale à la chemise (10a), la membrane (52) étant destinée à déplacer le manchon (73) sous l'action d'un fluide sous pression sur l'une de ses faces amené par l'un des conduits (19a, 20a) agencés dans le corps (51).

7. Porte-outil selon la revendication 5, caractérisé en ce que la bride (30) de la partie aval (D) est adaptée pour venir coulisser dans un plateau (46) de support du magasin à outils (F) au moyen de bords doublements biseautés en V (31) susceptibles de coulisser dans des rainures de guidage correspondantes (47) du plateau (46).

8. Porte-outil selon la revendication 5, caractérisé en ce que la bride (30) de la partie aval (D) forme avec une portée conjugée sur un plateau (46) de support du magasin à outils un assemblage verrouillé rotatif de type baïonnette.

9. Porte-outil suivant les revendications 1 et 6, caractérisé en ce que le fond (22a) du manchon (21, 73), actionné par le vérin (7–22, 51–52), coopère par percussion, comme un marteau, avec la tête (42) de verrouillage, sous l'action d'un fluide sous pression amené à l'extrémité supérieure du cylindre (7–51) du vérin.

## Patentansprüche

1. Werkzeugträger (B) zum Greifen und Wechseln von Werkzeugen für Industrieroboter (A) der auf einem Aufnahmeteil (5) um eine Achse (X–X) eines Armes des Roboters (A) drehbar angeordnet ist und eine Aufnahmeeinrichtung für ein mit einem Einsteckkonus (40) versehenes Werkzeug (E1, E2, ...) aufweist sowie zwei Teile umfasst, die aufeinanderfolgend anordbar und miteinander verriegelbar sowie danach trennbar sind, nämlich

– einen oberen Teil (C) der am Aufnahmeteil (5) des Roboters (A) befestigbar ist,

– einen unteren Teil (D), der an einem Werkzeug (E1, ...) befestigbar ist und mit diesem bei jedem Werkzeugwechsel derart verbunden ist, dass er als Aufnahme für das Werkzeug dient,

– wobei diese beiden Teile (C und D) mit komplementären Einrichtungen zum schnellen Zusammenbau, Verriegelung und Entriegelung versehen sind sowie zusammenwirkende lösbare Verbindungseinrichtungen zur Energieversorgung des Werkzeuges (E1, E2, ...) aufweisen und das obere Teil (C) einen Antrieb (7–22, 51–52) für die Verstellung der Verriegelungs- und Entriegelungselemente aufweist,

– und wobei der untere Teil (D) so ausgebildet ist, dass er mit dem zugehörigen Werkzeug in einem Magazin (F) für Werkzeuge für den auf dem Arm (5) des Roboters aufgenommenen oberen Teil (C) zugänglich und herausnehmbar untergebracht ist, dadurch gekennzeichnet, dass der obere Teil (C) einen bezüglich der Achse (X–X) zentralen Aufnahmekegel (70) aufweist, der im unteren Abschnitt eines nach unten offenen Haltefutters (10) ausgebildet ist, und dass der untere Teil (D) einen bezüglich der Achse (X–X) zentralen, entsprechend dem Aufnahmekegel (70) des aufwärtigen Teiles (C) ausgebildeten und in diesen einsteckbaren Einsteckkegel (40) aufweist, der in Richtung auf den oberen Teil (C) durch eine zum Einsteckkegel (40) koaxiale Stange (41) verlängert ist und in einem Verriegelungskopf (42) endet.

2. Werkzeugträger nach Anspruch 1, dadurch gekennzeichnet, dass der obere Teil (C) als Antrieb für die Verriegelungs- und Entriegelungseinrichtung ein doppelt wirkendes Schubkolbengetriebe (7, 22) mit einem längs der Achse (X–X) angeordneten Zylinder (7) aufweist, der nach unten offen und mit einem Boden zur Befestigung am Aufnahmeteil (5) versehen ist, sowie eine Gleitschürze (22) als Kolben im Zylinder (7) umfasst, die mit einer Muffe (21) verbunden ist, die koaxial im Zylinder (7) angeordnet und unter der Wirkung des Schubkolbengetriebes (7–22) auf dem mit der Basis des Zylinders (7) verbundenen Haltefutter (10) entlang der Achse (X–X) verschiebbar ist, und zwei Leitungen (19 und 20) für die Druckmittelzufuhr oder Druckmittelabfuhr beinhaltet, welche am oberen und unteren Ende des Zylinders (7) einmünden.

3. Werkzeugträger nach Anspruch 2, dadurch gekennzeichnet, dass zwischen der Gleitschürze (22) der Muffe (21) und dem Haltefutter (10) ein Ringraum vorhanden ist, in welchem eine zylindrische Schraubenfeder (26) mit der Achse (X–X) angeordnet ist, welche die Muffe (21) der Schürze (22) in eine obere Position vorspannt und auf dem Haltefutter (10) abgestützt ist.

4. Werkzeugträger nach Anspruch 1 oder 2, dadurch gekennzeichnet, dass der das Ende der Stange (41) bildende Verriegelungskopf (42) durch einen zur Muffe (21) und dem Zylinder (7) koaxialen doppelt konischen Aufbau gebildet ist, der sich aus zwei Kegelstümpfen (44, 45) zusammensetzt, die beidseits eines zentralen zylindrischen Bandes (43) angeordnet sind, dessen Durchmesser gleich dem der zentralen Bohrung (23) der Muffe (21) ist, um darin gleiten zu können, wobei der untere Kegelstumpf (45) sich in Verriegelungsstellung der Teile (C) und (D) auf einem Kranz von Kugeln (25) abstützt, die in einer Reihe von Öffnungen (24) im rohrförmigen Teil der Muffe (21) angeordnet sind.

5. Werkzeugträger nach Anspruch 1, bei welchem jeder Anschluss an eine Zufuhr von flüssigem oder gasförmigem Fluid unter Druck oder Unterdruck oder von Kühlfluid unter Abdichtung mittels eines an einem Flansch (27) des oberen Teiles (C) befestigten Einsteckteiles (28) erfolgt, welches mit dichtem Kontakt, in einen Dichtungsring (35) einfügbar ist, der im Inneren eines Anschlussvorsprunges (32) auf einem Flansch (30) des unteren Teiles (D) ausgebildet ist, dadurch gekennzeichnet, dass das Einsteckteil (28) kegelstumpfförmig und der zugeordnete Dichtungsring (35) mit einer in gleicher Weise leicht kegelstumpfförmigen Dichtlippe ausgebildet ist, wobei der Dichtungsring längs seines Umfanges zwischen dem Vorsprung (32) und einem auf dem Vorsprung (32) befestigten Deckel (36) befestigt ist.

6. Werkzeugträger nach Anspruch 1, dadurch gekennzeichnet, dass der Antrieb des oberen Teiles (C) für die Verstellung der Verriegelungs- und Entriegelungseinrichtung eine biegsame Membran (52) umfasst, die über ihren Umfang am Gehäuse (51) eines Zylinders (71) befestigt und mit einer koaxialen Buchse (73) verbunden ist, welche im Inneren eines feststehenden Futters (10a) verschiebbar ist, welches einstückig mit dem Gehäuse (51) des Zylinders (71) ausgebildet ist, dass die Muffe (73) mit einem ringförmigen Bund (60) versehen ist, der elastisch durch eine Schraubenfeder (26a) vorgespannt ist, die in einer koaxial zum Futter (10a) verlaufenden Nut angeordnet ist, wobei die Muffe (73) durch die Membrane unter Wirkung eines unter Druck stehenden Fluids auf eine ihrer Flächen über eine von im Gehäuse (51) angeordneten Leitungen (19a, 20a) verschiebbar ist.

7. Werkzeugträger nach Anspruch 5, dadurch gekennzeichnet, dass der Flansch (30) des unteren Teiles (D) so ausgebildet ist, dass er in einer Stützplatte (46) des Werkzeugmagazines (F) mittels doppelt geschrägter V-förmiger Ränder (31) verschiebbar ist, die in korrespondierenden Führungsnuten (47) der Platte (46) gleiten.

8. Werkzeugträger nach Anspruch 5, dadurch gekennzeichnet, dass der Flansch (30) des unteren Teiles (F) mit einer konjugierten Ausbildung auf einer Stützplatte (46) des Werkzeugmagazines eine bajonettartige Drehverriegelung bildet.

9. Werkzeugträger nach den Ansprüchen 1 bis 6, dadurch gekennzeichnet, dass der über den Antrieb (7, 22, 51–52) betätigte Boden (22a) der Muffe (21, 73) als Schlaghammer auf den Verriegelungskopf (42) unter der Wirkung eines unter Druck stehenden Fluids einwirkt, welches am oberen Ende des Zylinders (7–51) des Antriebes zugeführt wird.

## Claims

1. Tool-gripping and tool-changing tool holder (B) for an industrial robot (A), adapted to be fixed to a wrist (5) rotating about the axis (X–X) of an arm (1) of the robot (A) and comprising means for supporting a single tool (E1, E2, ...) comprising a mounting cone (40) cooperating with these means, comprising two parts able to be assembled and locked together in succession, then separated, namely:

– an upstream part (C) able to be fixed to the wrist (5) of the robot (A),

– a downstram part (D) able to be fixed to a tool (E1, ...) and remaining integral with the latter each time the tool is changed, in order to serve as a support for the latter,

– these two upstram (C) and downstream (D) parts being equipped with complementary assembly and locking means as well as rapid unlocking means and twin connection means which can be separated in order to ensure the supply of power to the tool (E1, E2, ...), the upstream part (C) containing a drive member (7–22, 51–52) for moving the locking and unlocking members,

– and the downstream part (D) being adapted in order to be able to be placed in a tool store (F) with the associated tool, in a removable manner and so that it is accessible to the upstream part (C) carried by the arm (5) of the robot (A), characterised in that the upstream part (C) comprises a central female cone (70) on the axis (X–X) formed in the lower part of a retaining sleeve (10) which is open towards the bottom, whereas the downstream part (D) comprises a central male cone (40) on the axis (X–X), interacting with the female cone (70) of the upstream part (C) in order to fit in the latter, extended towards the upstream part (C) by a rod (41) which is coaxial with the male cone (40) and terminated by a locking head (42).

2. Tool holder according to Claim 1, characterised in that the upstream part (C) comprises as the drive member for the locking and unlocking means, a double-acting jack (7–22), comprising a cylinder (7) on the axis (X–X) which is open towards the bottom and provided with a ceiling by which it is fixed to the wrist (5), a skirt (22) sliding as a piston in the cylinder (7) and integral with a sleeve (21) arranged coaxially in the cylinder (7) and able to slide on the sleeve (10) on the axis (X–X), integral with the base of the cylinder (7), under the action of the said jack (7–22), two pipes (19 and 20) opening out at the upper and lower ends of the cylinder (7) for the inlet of fluid under pressure or its discharge.

3. Tool holder according to Claim 2, characterised in that provided between the skirt (22) of the sleeve (21) and the skirt (10) is an annular space in which is housed a coil spring (26) on the axis (X–X) for returning the sleeve (21) of the skirt (22) to the upper position, bearing against the fixed sleeve (10).

4. Tool holder according to Claims 1 and 2, characterised in that the locking head (42) terminating the rod (41) is constituted by a biconical bulb coaxial with the sleeve (21) and the cylinder (7), this bulb being composed of two frustums of a cone (44, 45) arranged on either side of a central cylindrical strip (43) whereof the diameter is equal to that of the central bore (23) of the sleeve (21) in order to be able to slide therein, the lower frustum of the cone (45) being able to bear on a ring of balls (25), housed in a series of orifices (24) provided in the tubular part of the sleeve (21), in the locking position of the upstream and downstream parts (C) and (D) respectively.

5. Tool holder according to Claim 1, in which each connection of a supply of liquid or gaseous fluid under pressure or reduced pressure or of cooling fluid is achieved in a tight manner by means of a projecting mouth-piece (28) fixed to a flange (27) of the upstream part (C) and which may fit in tight contact in a sealing washer (35) provided inside a connecting boss (32) formed on the flange (30) of the downstream part (D), characterised in that the projecting mouth-piece (28) is frustoconical and the interacting sealing washer (35) also has a frustoconical lip and is fixed by its periphery between the boss (32) and a cover (36) fixed to the boss (32).

6. Tool holder according to Claim 1, characterised in that the upstream part (C) comprises as a drive member for moving the locking and unlocking means, a jack having a flexible membrane (52), the membrane being fixed by its periphery to the body (51) of a cylinder (71) and being integral with a coaxial sleeve (73), able to slide inside a fixed sleeve (10a), which is made in one piece with the body (51) of the cylinder (71), the sleeve (73) being provided with an annular flange (60) biased elastically by a return coil spring (26a) housed in a groove (11a) coaxial with the sleeve (10a), the membrane (52) being intended to move the sleeve (73) under the action of a fluid under pressure on one of its faces supplied by one of the pipes (19a, 20a) provided in the body (51).

7. Tool holder according to Claim 5, characterised in that the flange (30) of the downstream part (D) is adapted to slide in a plate (46) for supporting the tool store (F) by means of edges (31) having a double V-shaped bevel, which are able to slide in corresponding guide grooves (47) in the plate (46).

8. Tool holder according to Claim 5, characterised in that the flange (30) of the downstream part (D) forms a rotary, locked assembly of the bayonet type together with an interacting bearing on a plate (46) for supporting the tool store.

9. Tool holder according to Claims 1 and 6, characterised in that the bottom (22a) of the sleeve (21, 73), actuated by the jack (7–22, 51–52), cooperates by percussion, as a hammer, with the locking head (42), under the action of a fluid under pressure supplied to the upper end of the cylinder (7–51) of the jack.

## FIG. 1

FIG. 2

FIG. 3

# FIG. 4

# FIG. 5

FIG.6

FIG.7

19